# EUROPÄISCHE PATENTSCHRIFT

(11) **EP 2 107 081 B1**
(45) Veröffentlichungstag und Bekanntmachung des Hinweises auf die Patenterteilung: **26.01.2011**
(21) Anmeldenummer: 08006336.5
(22) Anmeldetag: 31.03.2008
(51) Int. Cl.: C08L 15/00, C08K 5/14

(54) **Kautschukzusammensetzung**
Rubber composition
Composition de caoutchouc

(43) Veröffentlichungstag der Anmeldung: 07.10.2009
(73) Patentinhaber: Carl Freudenberg KG, 69469 Weinheim (DE)
(72) Erfinder: Adler, Matthias, 64646 Heppenheim (DE); Viol, Michael, 69121 Heidelberg (DE); Bieringer, Ruth, 64668 Rimbach (DE)

(56) Entgegenhaltungen:
- EP-A- 0 657 501
- EP-A- 1 770 103
- US-A- 5 760 135
- US-B1- 6 403 716

## Beschreibung

Gegenstand der Erfindung ist ein Kautschukzusammensetzung zur Herstellung eines Elastomers, enthaltend mindestens eine Kautschukverbindung (A) und mindestens einen Radikalinitiator (B), wobei die Kautschukverbindung (A) radikalisch vemetzbar ist und niedrigviskoses vollständig hydriertes oder teilhydriertes Polyisopren beinhaltet. Die Erfindung betrifft auch daraus hergestellte Formköper sowie Verwendungen und Verfahren.

Radikalisch vernetzbare Kautschukzusammensetzungen werden zur Herstellung verschiedener Elastomere eingesetzt. Die vernetzten Produkte können für ein breites Spektrum von Anwendungen eingesetzt werden, beispielsweise für Dichtungen, Membranen, Profile und Beschichtungen. Dabei wird als Kautschukkomponente häufig Ethylen-Propylen-Dien-Kautschuk (EPDM) eingesetzt.

Das Dokument EP 1 075 034 A1 beschreibt die Anwendung von Polyisobutylen oder Perfluoropolyether, der über Hydrosilylierung vernetzt, als Dichtungsmaterial in der Brennstoffzelle.

Das Dokument US 6,743,862 B2 offenbart eine vernetzbare Kautschukkomposition, vorzugsweise aus Ethylen-Propylen-Dien-Monomer, mit einer mindestens zwei SiH-Gruppen enthaltenden Verbindung sowie optional mit einem Platinkatalysator und beschreibt dessen Verwendung als Dichtungsmaterial.

Das Dokument EP 1 277 804 A1 offenbart Zusammensetzungen mit einem Vinylpolymer mit zumindest einer über Hydrosilylierung vemetzbaren Alkenylgruppe, einer Verbindung mit einer hydrosilylgruppenhaltigen Komponente, einem Hydrosilylierungskatalysator sowie einer aliphatischen ungesättigten Verbindung mit einem Molekulargewicht von nicht mehr als 600 g/mol.

Die Dokumente DE 10 200 045 167 A1 und DE 10 2005 045 184 A1 betreffen Kautschukzusammensetzungen mit über Hydrosilylierung vemetzbaren Gruppen.

Die EP 1 770 103 A1 offenbart peroxidisch vernetzte hydrierte Vinylpolybutadiene und deren Verwendung zur Herstellung von Gummiartikeln.

Das US-Patent US 5,760,135 offenbart Klebstoffzusammensetzungen auf der Basis eines festen und eines flüssigen Kautschuks.

Die EP 0 657 501 A1 betrifft vulkanisierbare Kautschukzusammensetzungen aus einem nicht konjugierten Dien-Copolymerkautschuk, einem flüssigen Dien-Polymer, einem verstärkenden Füllstoff und einem organischen Peroxid.

Das US-Patent US 6,403,716 B1 betrifft thermoplastische Kautschukzusammensetzungen aus einem vernetzbaren Kautschukpolymer und einem Polypropylenharz.

### Aufgabe/Problem:

Die bekannten peroxidisch vemetzbaren niedrigviskosen Kautschukzusammensetzungen weisen verschiedene Nachteile auf.

Allgemein sind die mechanischen Eigenschaften der vernetzten Elastomere oft nicht optimal. So weisen Peroxid-vemetzte niedermolekulare EPDM-Elastomere häufig eine geringe Bruchdehnung auf. Auch die Zugfestigkeit und die Weiterreißfestigkeit sind oft nicht befriedigend. Allgemein besteht ein Bedürfnis nach radikalisch vemetzbaren Materialien, die hinsichtlich verschiedener zum Teil gegenläufiger Eigenschaften befriedigende Werte aufweisen, wie z.B. gute Druckverformungsreste bei geringen Härten ohne Verwendung von Weichmachern.

Ein Nachteil bekannter niedrigviskoser Kautschukzusammensetzungen die über Hydrosilylierung vernetzt werden, ist, dass bei der Anwendung der Hydrosilylierung viele Füllstoffe oder Additive nicht eingesetzt werden können, da diese die Vernetzungsreaktion verhindern oder beeinträchtigen. Es besteht daher ein Bedürfnis nach niedrigviskosen Kautschukzusammensetzungen, die mit einem breiten Spektrum von Additiven mischbar sind.

Es wird nach dem Stand der Technik versucht, diese Nachteile durch den Einsatz von Zusatzstoffen, wie Weichmachem, zu überwinden. So kann beispielsweise bei EPDM-Materialien eine Shore A-Härte von weniger als 50 im Allgemeinen nur erreicht werden, wenn Weichmacher zugesetzt werden. Als Weichmacher werden dabei beispielsweise natürliche oder synthetische Öle, Mineralöle, hydriertes oder teilweise hydriertes Polyisopren und dessen Derivate und Comonomere des Isoprens eingesetzt.

Der Einsatz von Weichmachem hat aber den Nachteil, dass diese nach der Vernetzung aus den Formkörpern herausdiffundieren können. Hierdurch können sich die Materialeigenschaften verändern und die freigesetzten Weichmacher können auf unerwünschte Weise die Umgebung verunreinigen oder in sonstiger Weise beeinträchtigen. Für Anwendungen im Lebensmittelbereich, Trinkwasserbereich, in der Medizintechnik, in der Elektronik und der Brennstoffzellentechnik können solche Materialien daher nur bedingt eingesetzt werden.

Der vorliegenden Erfindung liegt daher das Problem zugrunde, Kautschukzusammensetzungen und Formkörper bereitzustellen, die die beschriebenen Nachteile überwinden. Es soll eine Kautschukzusammensetzung bereitgestellt werden, die auf einfache Weise herstellbar, handhabbar und verarbeitbar ist. Diese soll sich durch Vernetzung zu Formkörpern verarbeiten lassen, die gute mechanische Eigenschaften aufweisen. Dabei soll insbesondere die Stabilität verbessert werde, beispielsweise der Spannwert, die Zugfestigkeit und die Bruchdehnung und die Weiterreißfestigkeit. Die Materialien sollen außerdem eine niedrige Shore A Härte aufweisen. Insbesondere sollen Formköper herstellbar sein, die diese verschiedenen Eigenschaften in vorteilhafter Weise verbinden.

Die Kautschukzusammensetzung soll auf einfache Weise vemetzbar sein und vergleichsweise unempfindlich sein. Sie soll die Zugabe verschiedener Additive, wie Füllstoffe, ermöglichen, ohne dass die Vernetzungsreaktion beeinträchtigt wird.

Eine weitere Aufgabe ist es, Kautschukzusammensetzungen bereitzustellen, die keine Weichmacher enthalten. Dadurch sollen die unerwünschten Nebenreaktionen und Begleiterscheinungen verhindert werden, die mit dem Einsatz von Weichmachern verbunden sind. Die erfindungsgemäßen Materialien sollen auch in üblichen Verfahren, wie Liquid Injection Moulding (LIM) oder In-Place-Gasket-Verfahren (IPG) verarbeitbar sein.

### Erfindung:

Das der Erfindung zugrunde liegende Problem wird überraschenderweise gelöst durch Polymermassen, Formkörper, Verfahren zu deren Herstellung und deren Verwendungen gemäß den Ansprüchen 1 bis 20.

Gegenstand der Erfindung ist eine Kautschukzusammensetzung zur Herstellung eines Elastomers, enthaltend
a) mindestens eine Kautschukverbindung (A) und
b) mindestens einen Radikalinitiator (B),
wobei die Kautschukverbindung (A) radikalisch vemetzbar ist und mindestens 50 phr vollständig hydriertes oder teilhydriertes Polyisopren mit einer Schmelzviskosität < 10⁵ bei 38°C beinhaltet.

Der Begriff "Kautschuk" bezeichnet im Sinne der Erfindung unvernetzte, aber vernetzbare Polymere mit gummielastischen Eigenschaften bei Raumtemperatur. Vorzugsweise handelt es sich um Verbindungen gemäß DIN 53501. Die "Kautschukzusammensetzung" der Erfindung ist nicht oder nur anteilig, d.h. nicht vollständig vernetzt (vulkanisiert). Sie ist durch die enthaltenen Radikalinitiatoren (B) vernetzbar, wodurch ein Formkörper erhalten wird. Die Kautschukzusammensetzung kann flüssig oder fest sein.

Der Begriff "Radikalinitiator" (Radikalstarter) bezeichnet Verbindungen, die in der Lage sind, Radikale zu bilden und dadurch radikalische Reaktionen zu initiieren. Die Bildung der Radikale erfolgt insbesondere bei Erhitzung oder Bestrahlung. Die initiierte Reaktion muss dabei keine Kettenreaktion sein. Geeignete Radikalinitiatoren sind insbesondere Peroxide Peroxyverbindungen, Azoverbindungen, Hydroperoxide und Perester. Die entstehenden Radikale bewirken die Vernetzung der Kautschukzusammensetzung.

Der Begriff "Formkörper" bezeichnet im Sinne der Erfindung allgemein das ausgehärtete, vernetzte Elastomer. Dieses weist eine dreidimensionale Form auf. Der Begriff "Formkörper" ist dabei nicht auf bestimmte räumliche Ausgestaltungen beschränkt und bezeichnet beispielsweise auch flächige Beschichtungen.

Die erfindungsgemäße Kautschukzusammensetzung (A) enthält Polyisopren (Abkürzung IR, Isoprene Rubber). Polyisopren ist ein häufig verwendeter Kautschuk, der aus dem Dien Isopren (2-Methyl-1,3-butadien) durch Polymerisation erhalten wird. In der Polymerkette von nicht hydriertem Polyisopren ist eine Doppelbindung pro Monomeruntereinheit enthalten. Polyisopren kommt in der Natur als *cis-*1,4-Polyisopren (Naturkautschuk) und als *trans*-1,4-Polyisopren (Guttapercha) vor. Beide Isomere lassen sich auch synthetisch herstellen.

Erfindungsgemäß ist das Polyisopren teilweise oder vollständig hydriert. Das bedeutet, dass das Polymer einer chemischen Behandlung unterzogen wurde, bei der die C-C-Doppelbindungen vollständig oder teilweise zu Einfachbindungen umgesetzt wurden. Erfindungsgemäß können beispielsweise 10 bis 100%, insbesondere 20 bis 95 oder 50 bis 95% der Polyisopren-Doppelbindungen hydriert sein. Es ist bevorzugt, dass mindestens 50, 70 oder 80% der Doppelbindungen hydriert sind. Bevorzugt sind mindestens 5 oder 10 % der Doppelbindungen nicht hydriert.

Das erfindungsgemäße Polyisopren ist niedrigviskos. Dies bedeutet, dass das Polymer selbst ohne Zusatzstoffe, wie Lösungsmittel, bei 25 °C oder 38 °C fließtähig ist. Die Schmelzviskosität bei 38 °C ist vorzugsweise < 10⁵, insbesondere <10⁴ oder < 5* 10³ Pa s. Vorzugsweise liegt die Schmelzviskosität bei 38°C zwischen 20 und 100000, insbesondere zwischen 50 und 50000 Pa s. In einer weiteren Ausführungsform der Erfindung ist die gesamte Kautschukverbindung (A) niedrigviskos.

Durch den Begriff der vemetzbaren "Kautschukzusammensetzung" wird deutlich, dass das Polyisopren als deren Bestandteil ebenfalls vemetzbar ist und ein wesentlicher Bestandteil des vernetzten dreidimensionalen Formkörpers ist. Dadurch sind Ausführungsformen ausgeschlossen, bei denen niedrigviskoses Polyisopren nur in geringen Mengen, beispielsweise als Weichmacher, zugesetzt wird.

Die Glasübergangstemperatur des Polyisoprens liegt bevorzugt zwischen -80 und -40 °C, insbesondere zwischen -70 und -50 °C.

Das hydrierte oder teilhydrierte Polyisopren weist vorzugsweise ein mittleres Molekulargewicht zwischen 5000 und 100000, bevorzugt zwischen 10000 und 60000, insbesondere zwischen 20000 und 30000 g/mol auf.

Erfindungsgemäß besonders geeignet ist das teilhydrierte Polyisopren, das die Firma Kuraray unter der Bezeichnung LIR-290 anbietet. Dabei steht "LIR" für "Liquid Isoprene Rubber". Es weist eine Schmelzviskosität von 1000 Pa s (38°C), ein mittleres Molekulargewicht von 25000 g/mol und eine Glasübergangstemperatur von -59°C auf. 90% der Isopreneinheiten sind hydriert.

Die Verbindungen der "LIR"-Serie werden von der Firma Kuraray als Weichmacher angeboten. Sie sind gemäß den Herstellern als Weichmacherzusätze für Kautschuk, wie EPDM, geeignet. Überraschenderweise wurde im Rahmen dieser Erfindung festgestellt, dass solche niedrigviskosen vollständig hydrierten und teilhydrierten Polymere nicht nur als Weichmacher geeignet sind, sondern dass sie als Kautschukverbindung zur radikalischen Vernetzung bei der Herstellung von Elastomeren eingesetzt werden können. Erfindungsgemäß ist es nicht erforderlich, der Kautschukzusammensetzung einen Weichmacher zuzusetzen. In einer bevorzugten Ausführungsform der Erfindung ist kein Weichmacher enthalten.

Erfindungsgemäß ist es möglich, vollständig hydriertes Polyisopren einzusetzen. Die Vernetzungsreaktion dauert dann üblicherweise länger, weil in den Polymeren keine reaktiven Doppelbindungen enthalten sind. Gegebenenfalls kann der Fachmann auch einen besonders reaktiven Radikalinitiator zusetzen oder die Menge an Radikalinitiatoren erhöhen, um eine vollständige Vernetzung zu erreichen.

Erfindungsgemäß umfassen die Kautschukverbindungen (A) mindestens 50 phr vollständig hydriertes oder teilhydriertes Polyisopren. Die Kautschukzusammensetzung enthält bevorzugt zwischen 0,1 und 15 phr des Radikalinitiators (B). Die Abkürzung phr steht für "parts per hundred rubber" und gibt die Gewichtsanteile pro hundert Gewichtsteile der Gesamtmenge Kautschuk, also der Gesamtmenge der Kautschukverbindungen (A), an.

Die gesamte Menge der Kautschukverbindungen (A) beinhaltet mehr als 50 phr hydriertes oder teilhydriertes Polyisopren. In weiteren Ausführungsformen ist der Gehalt an hydriertem oder teilhydriertem Polyisopren höher als 65, 75, 90, 95 oder 98 phr. Die Kautschukverbindung (A) kann auch zu 100 phr Polyisopren sein, d.h. vollständig aus dem hydrierten oder teilhydrierten Polyisopren bestehen. Die angegebenen Mengenanteile gehen deutlich über die Mengen hinaus, in denen die Verbindungen nach dem Stand der Technik als Weichmacher eingesetzt werden.

In einer bevorzugten Ausführungsform der Erfindung enthält die Kautschukzusammensetzung:
a) 100 phr Kautschukverbindungen (A), wobei davon mindestens 50 phr niedrigviskoses vollständig hydriertes oder teilhydriertes Polyisopren sind,
b) 0,1 bis 15 phr Radikalinitiator (B),
c) 0 bis 800 phr Füllstoffe (C),
d) 0 bis 30 phr Vemetzungsaktivatoren zur radikalischen Vernetzung (D),
e) gegebenenfalls weitere Additive (E).

In einer Ausführungsform der Erfindung enthält die Komponente a) der erfindungsgemäßen Kautschukzusammensetzung neben dem hydrierten oder teilhydrierten Polyisopren zusätzlich mindestens eine weitere Kautschukverbindung. Es können dabei übliche Kautschukverbindungen zugesetzt werden, die mit dem Polyisopren radikalisch vernetzt werden können. Es ist jedoch bevorzugt, dass das niedrigviskose vollständig oder teilweise hydrierte Polyisopren die Basiskomponente der Kautschukmischung ist. Das bedeutet, dass sie mengenmäßig den größten Anteil an der Komponente a) aufweist. Weitere Kautschukverbindungen können beispielsweise in Anteilen von bis zu 2, 5, 10, 25, 35 oder 50 phr zugesetzt werden.

Die weitere Kautschukverbindung kann ungesättigt oder gesättigt sein. Sie ist beispielsweise ausgewählt aus der Gruppe bestehend aus Ethylen/Propylen/Dien-Kautschuk (EPDM), Polybutadien, hydrierte oder teilhydrierte Polybutadiene, Ethylen/Proylpen-Kautschuk, Polyisobutylen, halogenierter Butylkautschuk, Styrol/Butadien-Elastomer, Polymethylpenten, Chloroprenkautschuk, halogenierte Kautschuke wie chlorierte oder fluorierte Polyethylene, Ethylen/Vinylacetat-Copolymere, Acrylatkautschuke, Nitrilkautschuke, hydrierte Nitrilkautschuke, nicht hydriertes und/oder hochviskoses Polyisopren, oder Copolymere der genannten Verbindungen, und Naturkautschuk. Es können auch Gemische aus zwei oder mehr der Kautschuke eingesetzt werden.

Die Radikalinitiatoren (B), die für die Vernetzung der hydrierten Polyisoprene geeignet sind, können organische Peroxide oder Peroxyverbindungen sein. Siekönnen symmetrisch oder unsymmetrisch aufgebaut sein. Geeignet sind insbesondere Peroxide wie Alkyl-, Aryl-, Arenyl- und Alkarylperoxide, Diacylperoxide, Peroxydicarbonate, Dialkylperoxide, Perester, Peroxyketale, Peroxyketone sowie Hydroperoxide. Geeignete Verbindungen sind Dicumylperoxid, Bis-(t-butyl-peroxy-isopropyl)benzol, Di-t-buylperoxid, 2,5-Dimethylhexan-2,5-dihydroperoxid, 2,5-Dimethylhexin-2,5-dihydroperoxid, Dibenzoylperoxid, Bis-(2,4-dichlorobenzoyl)peroxid. t-Butylperbenzoat, t-Butylperoxyisobutyrat sowie t-Butylcumylperoxid. Weitere Peroxide sind ausgewählt aus der Gruppe bestehend aus 2,5-Dimethyl-2,5-di(*tert-*butylperoxy)-hexan, 2,5-Dimethyl-2,5-di-(*tert*-butylperoxy)hexin(3); *n*-Butyl-4,4'-di(*tert*-butylperoxy)valerat, 1,1-Di(*tert*-butylperoxy)-3,3,5-trimethylcyclohexan, und 1,3-/1,4-Bis(*tert*-butylperoxy-isopropyl)benzol).

Als Radikalinitiatoren (B) können auch Azoverbindungen eingesetzt werden. Diese zerfallen bei Hitze oder Bestrahlung in Radikale. Geeignet sind beispielsweise Azo-bis-isobutyronitril, 2,2'-Azo-bis(2,4-dimethylvaleronitil) sowie Azo-biscyclohexannitril.

Die Radikalinitiatoren können beispielsweise als Pulver, Flocken, Flüssigkeiten oder in Form von Granulen eingesetzt werden. Dabei können die Radikalinitiatoren auf Trägerstoffe aufgetragen sein, wie Calciumcarbonat, Silikate, Kieselsäure, Kaolin oder organische Polymere. Entsprechende Peroxide sind kommerziell erhältlich, beispielsweise unter der Handelsbezeichung LUPEROX von der Firma Arkema oder unter der Handelsbezeichnung PEROXAN von der Firma Pergan. Bevorzugt ist beispielsweise 2,5-Dimethyl-2,5-di(*tert*-Butylperoxy)-hexan auf CaCO₃/SiO₂ (Handelsbezeichnung LUPEROX-101 XL-45, Firma Arkema).

Die Radikalinitiatoren werden bevorzugt in Mengenanteilen zwischen 0,1 und 15, insbesondere 0,5 und 10 oder 2 und 8 phr zugesetzt. Die Menge wird im Hinblick auf die Reaktivität der Kautschukzusammensetzung, des Radikalinitiators sowie von Vemetzungsaktivatoren, die die Vernetzung fördern, ausgewählt.

In bevorzugten Ausführungsformen der Erfindung ist der Füllstoff (C) ausgewählt aus Russ, Graphit, Kieselsäure, Silikat, Metalloxid, Metallhydroxid, Carbonate wie beispielsweise Calciumcarbonat, Glaskugeln, Sulfat, Bariumsulfat, Zinkoxid, Magnesiumoxid, Aluminumoxid, Eisenoxid, Diatomeenerde, magnetische bzw. magnetisierbare Füllstoffe wie beispielsweise NdFeB-Verbindungen oder Sr-Ferrite, leitfähige Füllstoffe, wie metallisierte Füllstoffe oder Metallfasern, Fasern und organischem Füllstoff. Ebenfalls vorteilhaft sind oberflächenmodifizierte bzw. hydrophobierte, gefällte und/oder pyrogener Kieselsäure, oberflächenmodifiziertes Metalloxid,oberflächenmodifiziertes Metallhydroxid, oberflächenmodifiziertes Carbonat, wie Kreide oder Dolomit, oberflächenmodifiziertes Silikat, wie Kaolin, calciniertes Kaolin, Talkum, Quarzmehl, Kieselerde, Schichtsilikat, Glaskugeln, Fasern und/oder organische Füllstoffe, wie beispielsweise Holzmehl oder Cellulose. Der Füllstoff (C) ist insbesondere ausgewählt aus Fumace-, Flamm- und/oder Channel-Russ. Allgemein kann der Füllstoff oberflächenmodifiziert sein. Die Menge der Füllstoffe ist bevorzugt zwischen 1 und 800 phr, insbesondere zwischen 10 und 500 phr oder 20 und 150 phr.

Hydrophobierte bzw. hydrophobe Kieselsäuren lassen sich besonders gut in unpolare Kautschuke einarbeiten und bewirken eine geringere Viskositätserhöhung sowie bessere mechanische Werte als unmodifizierte Kieselsäuren. Insbesondere lässt sich eine geringere Viskositätserhöhung sowie ein besserer Druckverformungsrest (DVR) erzielen. Geeignet ist beispielsweise hydrophobierte pyrogene Kieselsäure der Firma Degussa (Aerosil R8200). Die Vulkanisate können durch die Auswahl geeigneter Füllstoffe flammfest ausgerüstet werden. Dafür eignen sich entsprechenden Hydroxide, wie Aluminiumhydroxid, Magnesiumhydroxid und Calciumhydroxid, sowie wasserhaltige Salze, insbesondere Salze, die Wasser als Kristallwasser binden.

Gemeinsam mit den Füllstoffen können zur Erzielung bestimmter Produkt- und/oder Vulkanisationseigenschaften Füllstoffaktivatoren zugesetzt werden. Die Füllstoffaktivatoren können beim Mischen der Zusammensetzung hinzugefügt werden. Es kann aber auch eine Vorbehandlung des Füllstoffes mit Füllstoffaktivatoren erfolgen, bevor der Füllstoff der Kautschukmischung zugesetzt wird. Hierzu können organische Silane, wie beispielsweise Vinyltrimethoxysilan, Vinyldimethoxymethylsilan, Vinyltriethoxysilan, Vinyltris(2methoxy-ethoxy)silan, N-Cyclohexyl-3-aminopropyltrimethoxysilan, 3-Aminopropyltrimethoxysilan, Methyltrimethoxysilan, Methyltriethoxysilan, Dimethyldimethoxysilan, Isooctyltrimethetoxysilan, Isooctyltriethoxysilan, Hexadecyltrimethoxysilan oder (Octadecyl)methyldimethoxysilan eingesetzt werden. Weitere Füllstoffaktivatoren sind zum Beispiel grenzflächenaktive Substanzen wie Triethylamin und Ethylenglycole mit Molekulargewichten von 74 bis 10000 g/mol.

In einer bevorzugten Ausführungsform der Erfindung enthält die Kautschukzusammensetzung zusätzlich mindestens einen Vemetzungsaktivator (D), der die radikalische Vernetzung, insbesondere die peroxidische Vernetzung, unterstützt. Die Vemetzungsaktivatoren erhöhen die Vemetzungseffizienz der Radikalinitiatoren. Als Vemetzungsaktivatoren (D) werden Substanzen eingesetzt, die mindestens eine, vorzugsweise zwei und mehr C=C-Doppelbindungen enthalten, und die nicht teilhydriertes Polyisopren sind. Die Doppelbindungen reagieren bei der radikalischen Vernetzung. Geeignete Verbindungen mit einer einzigen C=C-Doppelbindung sind mono-Acrylsäureester oder mono-Diacrylssäureester. Geeignete Verbindungen mit zwei bis vier reaktiven C=C-Doppelbindungen sind Diallylmelamin, Diisopropenylbezol, Divinylbenzol, Divinylether, Divinylsulfon, Diallylphthalat, Triallylcyanurat, Triallylisocyanurat, Triallylphosphat, N,N'-1,3-Phenylenbismaleimid, 2,4-Toluylenbis(maleimid) und Triallyltrimellitat. Weitere geeignete Vemetzungsaktivatoren sind die Acrylate und Methacrylate von mehrwertigen, vorzugsweise 2-4-wertigen, C2-bisC10-Alkoholen, wie von Ethylenglykol, Propandiol-1,2, Butandiol, Hexandiol, Polyethylenglycol mit 2 bis 20, vorzugsweise 2 bis 8 Oxyethyleneinheiten, Neopentylglykol, Bisphenol-A, Glycerin, Trimethylolpropan, Pentaerythrit und Sorbit. Dabei sind die zwei oder mehr Hydroxygruppen der Alkohole verestert, so dass es sich um Di-, Tri- oder Tetraacrylate oder - methacrylate handelt. Geeignet sind auch ungesättigte Polyester aus aliphatischen Diolen und Polyolen, ebenso wie Maleinsäure, Fumarsäure und /oder Itaconsäure. Vemetzungsaktivatoren mit mehr als 4 reaktiven C=C-Doppelbindungen sind insbesondere Oligomere oder Polymere mit endständigen Vinylgruppen an den Oligomer- oder Polymerseitenketten, insbesondere 1,2-Polybutadien-Oligomere oder -Polymere.

Die Menge des Vemetzungsaktivators (D) ist bevorzugt zwischen 0,1 und 30 phr, insbesondere zwischen 0,5 und 20 phr.

Es wurde gefunden, dass sich bei der erfindungsgemäßen Zusammensetzung durch die Zugabe von Vemetzungsaktivatoren, wie zum Beispiel 1,2-Polybutadien (Nisso-PB B-3000) oder Triallylisocyanurat (TAIC), bei der Peroxidvernetzung eine Zunahme der Vemetzungsdichte erzielen lässt. Dies wirkt sich in der Zunahme der Härte und der Zunahme der Zugfestigkeit aus. Die Zugabe eines Vernetzungsaktivators wirkt sich zudem in einer deutlichen Herabsetzung einer bleibenden Verformung des Kautschuks unter Last aus, also in der Abnahme des Druckverformungsrestwertes (DVR).

Bei bekannten Kautschukformkörpem nimmt dabei üblicherweise gleichzeitig die Bruchdehnung in unerwünschter Weise ab. Überraschenderweise kann die Bruchdehnung der erfindungsgemäß hergestellten Formkörper bei der Zugabe von Vemetzungsaktivatoren zunehmen, insbesondere bei Zugabe von 1,2-Polybutadien (Nisso-PB B-3000). Dieser positive Effekt eröffnet verbesserte Einsatzmöglichkeiten der Formkörper in zahlreichen Anwendungsgebieten.

Bevorzugt werden als Vemetzungsaktivatoren (D) Oligomere oder Polymere mit endständigen Vinylgruppen an den Polymerseitenketten eingesetzt, insbesondere Butadien-Oligomere. Solche Verbindungen lassen sich beispielsweise durch anionische Lebendpolymerisation herstellen. Das durchschnittliche Molekulargewicht liegt vorzugsweise zwischen 500 und 10000, insbesondere zwischen 600 und 5000 oder zwischen 800 und 4000 g/mol. Solche Oligomere werden beispielsweise unter der Handelsbezeichnung NISSO-PB von der Firma NISSO vertrieben. Besonders geeignet sind die Verbindungen der B-Serie, wie Nisso-PB B-3000. Die 1,2-Polybutadienverbindungen können Hydroxy- oder Carboxy-terminiert sein.

Der Vemetzungsaktivator (D) ist vorteilhafterweise ausgewählt aus 2,4,6-Tris(allyloxy)-1,3,5-triazin (TAC), Triallylisocyanurat (TAIC), 1,2-Polybutadien, 1,2-Polybutadienderivaten, mono-Acrylaten, Diacrylaten, Triacrylaten, insbesondere Trimethylpropantriacrylat, mono-Methacrylaten, Dimethacrylaten und/oder Trimethacrylaten, insbesondere Trimethylolpropantrimethacrylat (TRIM), Triallylphosphonsäureestern und/oder Butadien-Styrol-Copolymeren.

Die Kautschukzusammensetzung kann mindestens einen weiteren Zusatzstoff (E) enthalten. Dabei können bekannte Zusatzstoffe eingesetzt werden, die im Bereich der Kautschukverarbeitung üblicherweise verwendet werden. Die Zusatzstoffe (E) sind beispielsweise ausgewählt aus der Gruppe bestehend aus Alterungsschutzmitteln, Antioxidantien, Ozonschutzmitteln, Flammschutzmitteln, Hydrolyseschutzmitteln, Haftvermittlern, Entformungsmitteln bzw. Mitteln zur Reduzierung der Bauteilklebrigkeit, Farbstoffen und Pigmenten, Weichmachern und Verarbeitungshilfen.

Geeignete Zusatzstoffe (E) sind beispielsweise:
- Alterungsschutzmittel, beispielsweise UV-Absorber, UV-Screener, Hydroxybenzophenonderivate, Benzotriazoderivate oder Triazinderivate
- Antioxidantien, zum Beispiel gehinderte Phenole, Lactone oder Phosphite, gehinderte Amine,
- Ozonschutzmittel, zum Beispiel paraffinische Wachse,
- Flammschutzmittel,
- Hydrolyseschutzmittel, wie Carbodiimidderivate,
- Haftvermittler, wie Silane mit über Peroxidvemetzung an die Kautschukmatrix anbindenden funktionellen Gruppen, zum Beispiel mit Vinyltrimethoxysilan, Vinyltriethoxysilan, mit funktionalisierten Kautschuken modifizierte Polymere, wie Maleinsäurederivate, zum Beispiel Maleinsäureanhydrid,
- Entformungsmittel bzw. Mittel zur Reduzierung der Bauteilklebrigkeit, wie zum Beispiel Wachse, Fettsäuresalze oder - amide, Polysiloxane, Polysiloxane mit über Peroxidvemetzung an die Kautschukmatrix anbindenden funktionellen Gruppen,
- Farbstoffe und Pigmente,
- Weichmacher,
- Verarbeitungshilfen und
- weitere, nicht kautschukartige Polymere.

Es steht dabei dem Fachmann frei, hinsichtlich der einzelnen Komponenten der Kautschukzusammensetzung eine einzige Verbindung auszuwählen, oder jeweils ein Gemisch aus 2, 3 oder mehr Komponenten einzusetzen. Insbesondere bei den Zusatzstoffen (E) ist es üblich, mehrere Zusatzstoffe einzusetzen, um dem Formkörper und der Kautschukzusammensetzung mehrere vorteilhafte Eigenschaften zu verleihen. Auch kann ein Gemisch mehrerer Kautschuke und/oder Polymere eingesetzt werden, um bestimmte Stoffeigenschaften zu erzielen, oder ein Gemisch mehrerer Radikalinitiatoren b), um einen gewünschten Reaktionsverlauf einzustellen.

Gegenstand der Erfindung ist auch ein Verfahren zur Herstellung einer erfindungsgemäßen Polymerzusammensetzung. Dabei werden zunächst die Inhaltsstoffe zusammengegeben und vermischt und gegebenenfalls in einem Mischer oder einer Mahlvorrichtung homogenisiert. Die Verarbeitung und/oder Vernetzung kann bei erhöhter Temperatur erfolgen, beispielsweise bei 200°C, 100°C oder 50°C. Die niedrigviskose Basiskomponente ermöglicht jedoch vorzugsweise eine Verarbeitung bei einer relativ niedrigen Temperatur von 25 bis 120°C oder bei Raumtemperatur. Die Verarbeitungs- und Vemetzungszeiten können im Hinblick auf die Temperatur, die Menge und den Typ des Radikalinitiators eingestellt werden. Allgemein gilt, dass die Zeiten umso kürzer sind, je höher die Temperatur und der Anteil an Radikalinitiatoren sind.

Zur Herstellung einer erfindungsgemäßen Kautschukzusammensetzung werden beispielsweise zunächst die Kautschukverbindungen (A), die Füllstoffe (C), die Vemetzungsaktivatoren (D) und/oder Zusatzstoffe (E) gemischt. Anschließend wird der Radikalinitiator (B) zugegeben. Es können auch alle Komponenten (A) bis (E) gleichzeitig gemischt werden.

Gegenstand der Erfindung sind auch Formkörper, die aus den erfindungsgemäßen Kautschukzusammensetzungen herstellbar sind. Dabei wird die Kautschukzusammensetzung zu dem Formkörper verarbeitet. Während oder nach der Verarbeitung findet die radikalische Vernetzung statt.

In einer Ausführungsform der Erfindung ist die Shore A Härte (nach DIN 53505) der erfindungsgemäßen Formkörper <80, insbesondere <60 oder <50. Die Zugfestigkeit (nach DIN 53504-S2) ist vorzugsweise >5, insbesondere >6 MPa. Die Bruchdehnung nach DIN 53504-S2 ist bevorzugt >150, insbesondere >200 oder >300 %.

Die erfindungsgemäße Kautschukzusammensetzung kann dabei durch bekannte Verfahren zur Kautschukverarbeitung und Elastomerherstellung verarbeitet werden. Die Verarbeitung erfolgt beispielsweise durch Spritzguss- bzw. (Liquid)Injection-Moulding-Verfahren ((L)IM), durch Pressen bzw. ein Compression-Moulding-Verfahren (CM), durch ein Transfer-Moulding-Verfahren (TM) oder durch ein davon jeweils abgeleitetes Verfahren, ein Druckverfahren, wie zum Beispiel Siebdruck, durch Raupenauftrag, Tauchen oder Sprühen.

Die erfindungsgemäßen Formkörper und Kautschukzusammensetzungen sind in einer Vielzahl von Anwendungen brauchbar. Vorteilhaft ist der Einsatz in Brennstoffzellen, in der Produktions-, Transport-, Prozesstechnik, in der Lebensmittel- und Medizintechnik und im Verpackungsbereich von Lebensmitteln oder von medizinischen Produkten. Bevorzugt ist die Verwendung als oder in Dichtungen, wie lose Dichtungen, wie zum Beispiel O-Ringe oder Nutringe, wie Klebedichtungen, Softmetalldichtungen bzw. Imprägnierungen. Weiter bevorzugt ist die Verwendung für Beschichtungen. Besonders bevorzugt ist der Einsatz als oder in Membranen, insbesondere von Pumpen, im Brennstoffzellenbereich, im Trinkwasser-, Lebensmittel-, Heizungs- und Sanitärbereich.

Die Materialien können auch eingesetzt werden als Klebemassen oder Dichtmassen in Schläuchen, Ventilen, Pumpen, Fittem, Befeuchtem, Reformern und Vorratsgefäßen (Tanks). Weiter können die Materialien als Werkstoff für Schwingungsdämpfer, akustisch aktive Bauteile, für Beschichtungen von Geweben und Vliesstoffen, elektromagnetische Abschirmungen, Reifen, Bremsmanschetten, Bremsenteile, Achsmanschetten, Faltenbälgen, für Bodenbeläge und/oder für Profile, oder als Bestandteile solcher Vorrichtungen oder Anwendungen verwendet werden.

Eine besonders vorteilhafte Anwendung der erfindungsgemäßen Kautschukzusammensetzungen und Formkörper liegt in der Verwendung als Dichtung für Brennstoffzellen, insbesondere von Stacks. Diese erfolgt beispielsweise in Form von losen, unprofilierten oder profilierten Dichtungen. Vorzugsweise werden die erfindungsgemäßen Kautschukzusammensetzungen auch als auf einer Bipolarplatte, einer Membran, einer Gasdiffusionsschicht oder als in einer Membran-Elektrodeneinheit integrierte unprofilierte oder profilierte Dichtungen verwendet. Die erfindungsgemäßen Materialien eignen sich insbesondere als integrierte Dichtungen auf metallischen, polymeren oder graphitischen Trägern, oder auf Geweben oder Vliesstoffen insbesondere von Gasdiffusionslagen oder Bipolarplatten von Brennstoffzellen.

Die erfindungsgemäßen Kautschukzusammensetzungen, Formkörper, Verfahren und Verwendungen lösen die der Erfindung zugrunde liegende Aufgabe. Es werden Formkörper erhalten, die ausgezeichnete mechanische Eigenschaften aufweisen. So lassen sich erfindungsgemäß Materialien herstellen, die eine niedrige Härte und gleichzeitig eine hohe Zugfestigkeit, Bruchdehnung und/oder Weiterreißfestigkeit aufweisen. Aufgrund der gleichmäßigen Kettenstruktur von Polyisopren sind die mechanischen Eigenschaften besser als bei vergleichbaren Polypropylen/Polyethylen-Copolymeren. Bei diesen sind in der Polymerkette immer Sequenzen mit mehreren aufeinanderfolgenden Propylen- oder Ethylenuntereinheiten enthalten, wodurch mechanische Eigenschaften wie der Druckverformungsrest und die Kälteflexibilität verbessert werden.

Es sind zahlreiche Additive einsetzbar, die Materialen nach dem Stand der Technik negativ beeinträchtigen würden. Der Zusatz von Weichmachern ist nicht erforderlich. Die Kautschukzusammensetzungen sind aufgrund der niedrigen Viskosität des eingesetzten Polyisoprens leicht herstellbar, mischbar und verarbeitbar. Der Zusatz von Verdünnem oder Lösungsmitteln ist nicht erforderlich. In einer bevorzugten Ausführungsform der Erfindung enthält die Zusammensetzung keine Lösungsmittel.

### Ausführungsbeispiel:

Es wurden erfindungsgemäße Kautschukzusammensetzungen und solche gemäß dem Stand der Technik hergestellt, zu Prüfkörpern verarbeitet und verschiedenen Prüfungen unterzogen. Die Inhaltsstoffe der hergestellten Kautschukzusammensetzungen und die Gewichtsanteile in phr sind in der Tabelle 1 angegeben. Der Kautschuk (A), der Radikalinitiator (B), der Füllstoff (C) und die Vemetzungsaktivatoren (D) wurden in einem Mischer (SpeedMixer DAC 400FVZ der Firma Hausschild & Co KG) bei einer Temperatur zwischen 30 und 60°C bis zu einer homogenen Verteilung der Komponenten gemischt. Aus dieser Mischung wurden unter Vulkanisationsbedingungen bei 190°C, beispielsweise in einer Presse, 2 mm dicke Platten gepresst.

Die Muster wurden folgenden Prüfungen unterzogen:
- Härte [Shore A]:: nach DIN 53505
- Zugfestigkeit [MPa]:: nach DIN 53504-S2
- Rückprallelastizität:: nach DIN 53512

Modul (Spannungswert) 100% [MPa] und Bruchdehnung [%] nach DIN 53504-S2
Druckverformungsrest (DVR) [%] nach 26% Deformation (bei 24 h, 120 °C in Luft) nach DIN ISO 815.

Der Tabelle 1 sind die Prüfwerte zu entnehmen. Die Beispiele 1, 3 und 5 zeigen Materialien aus EPDM nach dem Stand der Technik. Die Beispiele 2, 4 und 6 sind erfindungsgemäß. Die Werte zeigen, dass die mechanischen Werte für die erfindungsgemäß hergestellten Formkörper jeweils deutlich verbessert sind.

**Tabelle 1: Beispiele 1 bis 6**

| **Komponente:** | **Material/Eigenschaft:** | **Hersteller:** | **Bsp.1** | **Bsp. 2** | **Bsp. 3** | **Bsp. 4** | **Bsp. 5** | **Bsp. 6** |
|---|---|---|---|---|---|---|---|---|
| Kautschuk | PX 062 (L-EPDM) | Mitsui | 100 | 0 | 100 | 0 | 100 | 0 |
| Kautschuk | LIR290 (hydriertes L-IR) | Kuraray | 0 | 100 | 0 | 100 | 0 | 100 |
| Füllstoff | Durex 0 | Degussa | 0 | 0 | 0 | 0 | 55 | 55 |
| Füllstoff | Aerosil R 8200 | Degussa | 30 | 30 | 30 | 30 | 0 | 0 |
| Vernetzungsaktivator | Nisso-PB-B3000 | Nisso Chemical Europe | 0 | 0 | 0 | 0 | 7,5 | 7,5 |
| Peroxid | Luperox 101 XL 45 | Arkema | 5 | 5 | 4 | 4 | 4 | 5 |
| | | | | | | | | |
| | Härte Shore A | | 52 | 40 | 55 | 33 | 76 | 76 |
| | Spannwert 100%/MP a | | 1,7 | 0,7 | | 0,5 | | |
| | Zugfestigkeit/MPa | | 2,8 | 6,9 | 2,1 | 6,2 | 4,1 | 7 |
| | Bruchdehnung | | 140 | 390 | 144 | 476 | 42 | 81 |
| | DVR 24H 120°C/% | | | | 20 | 18 | 13 | 8 |
| | DVR 70H 150°C/% | | 27 | 26 | | | | |
| | Rückpralleiastizität | | 34 | 32 | | | | |

## Patentansprüche

1. Kautschukzusammensetzung zur Herstellung eines Elastomers, enthaltend
a) mindestens eine Kautschukverbindung (A) und
b) mindestens einen Radikalinitiator (B),
wobei die Kautschukverbindung (A) radikalisch vemetzbar ist und mindestens 50 phr vollständig hydriertes oder teilhydriertes Polyisopren mit einer Schmelzviskosität <10⁵ Pas bei 38°C beinhaltet.

2. Kautschukzusammensetzung nach Anspruch 1, enthaltend
a) 100 phr Kautschukverbindungen (A), wobei davon mindestens 50 phr niedrigviskoses vollständig hydriertes oder teilhydriertes Polyisopren sind, und
b) 0,1 bis 15 phr des Radikalinitiators (B).

3. Kautschukzusammensetzung nach Anspruch 1 oder 2, wobei das Polyisopren ein mittleres Molekulargewicht von 5000 bis 100000 g/mol, bevorzugt von 10000 bis 60000 g/mol aufweist.

4. Kautschukzusammensetzung nach einem der vorhergehenden Ansprüche, enthaltend
a) 100 phr der Kautschukverbindungen (A), wobei mindestens 50 phr davon niedrigviskoses vollständig hydriertes oder teilhydriertes Polyisopren sind,
b) 0,1 bis 15 phr des Radikalinitiators (B),
c) 0 bis 800 phr Füllstoffe (C),
d) 0 bis 30 phr Vemetzungsaktivatoren zur radikalischen Vernetzung (D),
e) gegebenenfalls weitere Zusatzstoffe (E).

5. Kautschukzusammensetzung nach einem der vorhergehenden Ansprüche, wobei zusätzlich zu dem vollständig hydrierten oder teilhydrierten Polyisopren mindestens eine weitere Kautschukverbindung enthalten ist, ausgewählt aus der Gruppe bestehend aus Ethylen/Propylen/Dien-Kautschuk (EPDM), Polybutadien, hydrierte oder teilhydrierte Polybutadiene, Ethylen/Proylpen-Kautschuk, Polyisobutylen, halogenierter Butylkautschuk, Styrol/Butadien-Elastomer, Polymethylpenten, Chloroprenkautschuk, halogenierte Kautschuke wie chlorierte oder fluorierte Polyethylene, Ethylen/Vinylacetat-Copolymere, Acrylatkautschuke, Nitrilkautschuke, hydrierte Nitrilkautschuke, nicht hydriertes und/oder hochviskoses Polyisopren, oder Copolymere der genannten Verbindungen, und Naturkautschuk.

6. Kautschukzusammensetzung nach einem der vorhergehenden Ansprüche, wobei der mindestens eine Radikalinitiator (B) ausgewählt ist aus der Gruppe bestehend aus Peroxide, Peroxyverbindungen, Alkyl-, Aryl-, Arenyl- und Alkarylperoxide, Diacylperoxide, Peroxydicarbonate, Dialkylperoxide, Perester, Peroxyketale, Peroxyketone, Hydroperoxide und Azoverbindungen.

7. Kautschukzusammensetzung nach einem der vorhergehenden Ansprüche, wobei der Radikalinitiator eine Peroxidverbindung (B) enthält, ausgewählt aus der Gruppe bestehend aus Dicumylperoxid, Bis-(t-butyl-peroxy-isopropyl)benzol, Di-t-buylperoxid, 2,5-Dimethylhexan-2,5-dihydroperoxid, 2,5-Dimethylhexin-2,5-dihydroperoxid, Dibenzoylperoxid, Bis-(2,4-dichlorobenzoyl)peroxid. t-Butylperbenzoat, t-Butylperoxyisobutyrat, t-Butylcumylperoxid, 2,5-Dimethyl-2,5-di(*tert-*butylperoxy)-hexan, 2,5-Dimethyl-2,5-di-(*tert*-butylperoxy)hexin(3); *n-*Butyl-4,4'-di(*tert*-butylperoxy)valerat, 1,1-Di(*tert*-butylperoxy)-3,3,5-trimethyl-cyclohexan und 1,3-/1,4-Bis(*tert*-butylperoxy-isopropyl)benzol.

8. Kautschukzusammensetzung nach einem der vorhergehenden Ansprüche, wobei der Füllstoff (C) ausgewählt ist aus Russ, Graphit, Kieselsäure, Silikat, Metalloxid, Metallhydroxid, Carbonat, Sulfat, Glaskugeln, Diatomeenerde, magnetische oder magnetisierbare Füllstoffe, leitfähige Füllstoffe, Fasern und organische Füllstoffe.

9. Kautschukzusammensetzung nach einem der vorhergehenden Ansprüche, wobei als Vemetzungsaktivator (D) Verbindungen eingesetzt werden, die mindestens eine, vorzugsweise zwei und mehr C=C-Doppelbindungen enthalten.

10. Kautschukzusammensetzung nach einem der vorhergehenden Ansprüche, wobei der Vemetzungsaktivator (D) mindestens eine Verbindung ist, ausgewählt aus 2,4,6-Tris(allyloxy)-1,3,5-triazin (TAC), Triallylisocyanurat (TAIC), Diallylmelamin, Diisopropenylbezol, Divinylbenzol, Divinylether, Divinylsulfon, Diallylphthalat, Triallylcyanurat, Triallylphosphat, N,N'-1,3-Phenylenbismaleimid, 2,4-Toluylenbis(maleimid), Triallyltrimellitat, Butadien-Oligomere oder - Polymere, 1,2-Polybutadien, 1,2-Polybutadienderivate, Butadien-Styrol-Copolymeren, mono-Acrylate, Diacrylate, Triacrylate, Trimethylpropantriacrylat, mono-Methacrylate, Dimethacrylate, Trimethacrylate, Trimethylolpropantrimethacrylat (TRIM), Triallylphosphonsäureestem, ungesättigte Polyester aus aliphatischen Diolen und Polyolen, Maleinsäure, Fumarsäure und /oder Itaconsäure.

11. Kautschukzusammensetzung nach einem der vorhergehenden Ansprüche, wobei der zumindest eine Zusatzstoff (E) ausgewählt ist aus der Gruppe bestehend aus Alterungsschutzmitteln, Antioxidantien, Ozonschutzmitteln, Flammschutzmitteln, Hydrolyseschutzmitteln, Haftvermittlern, Entformungsmitteln bzw. Mitteln zur Reduzierung der Bauteilklebrigkeit, Farbstoffen und/oder Pigmenten, Weichmachern und Verarbeitungshilfen.

12. Verwendung einer Kautschukzusammensetzung nach einem der Ansprüche 1 bis 11 zur Herstellung eines Formkörpers.

13. Verfahren zur Herstellung einer Kautschukzusammensetzung nach einem der vorhergehenden Ansprüche, wobei die Inhaltsstoffe zusammengegeben und vermischt und gegebenenfalls homogenisiert werden.

14. Verfahren zur Herstellung eines Formköpers, wobei eine Kautschukzusammensetzung gemäß einem der Ansprüche 1 bis 11 gegebenenfalls unter Erhöhung der Temperatur radikalisch vernetzt wird.

15. Verfahren nach einem der Ansprüche 13 oder 14 zur Herstellung einer Dichtung bzw. Imprägnierung, Beschichtung, Membran oder Klebemasse, insbesondere von Schläuchen, Ventilen, Pumpen, Filtern, Befeuchtern, Reformern, Vorratsgefäßen, Schwingungsdämpfern und akustisch aktiven Bauteilen; als Beschichtung von Geweben und Vliesstoffen, einer elektromagnetische Abschirmung, von Reifen, Bremsmanschetten, Bremsenteilen, Achsmanschetten, Faltenbalgen, Bodenbelägen oder Profilen; sowie von Dichtungen, Membranen oder Gasdiffusionsschichten für Brennstoffzellen.

16. Formkörper, erhältlich durch ein Verfahren gemäß Anspruch 14.

17. Formkörper nach Anspruch 14 oder 16 in Form einer Dichtung bzw. Imprägnierung, Beschichtung, Membran oder Klebemasse, insbesondere von Schläuchen, Ventilen, Pumpen, Filtern, Befeuchtem, Reformern, Vorratsgefäßen, Schwingungsdämpfern und akustisch aktiven Bauteilen; als Beschichtung von Geweben und Vliesstoffen, als elektromagnetische Abschirmung, als Reifen, Bremsmanschette, Bremsenteil, Achsmanschette, Faltenbalg, Bodenbelag oder Profil; sowie als Dichtung, Membran oder Gasdiffusionsschicht für Brennstoffzellen.

18. Verwendung eines Formkörpers nach einem der Ansprüche 14, 16 oder 17 in Brennstoffzellen, im Produktions-, Transport-, Prozesstechnik- und Verpackungsbereich von Lebensmitteln oder von medizinischen Produkten, als Dichtung, als Beschichtung und/oder als Klebemittel.

## Claims

1. Rubber composition for production of an elastomer, comprising
a) at least one rubber compound (A) and
b) at least one free-radical initiator (B),
wherein the rubber compound (A) is free-radically crosslinkable and includes at least 50 phr of fully hydrogenated or partly hydrogenated polyisoprene having a melt viscosity < 10⁵ Pas at 38°C.

2. Rubber composition according to Claim 1, comprising
a) 100 phr of rubber compounds (A), of which at least 50 phr is low-viscosity fully hydrogenated or partly hydrogenated polyisoprene, and
b) 0.1 to 15 phr of the free-radical initiator (B).

3. Rubber composition according to Claim 1 or 2, wherein the polyisoprene has a mean molecular weight of 5000 to 100 000 g/mol, preferably of 10 000 to 60 000 g/mol.

4. Rubber composition according to any of the preceding claims, comprising
a) 100 phr of rubber compounds (A), of which at least 50 phr is low-viscosity fully hydrogenated or partly hydrogenated polyisoprene, and
b) 0.1 to 15 phr of the free-radical initiator (B),
c) 0 to 800 phr of fillers (C),
d) 0 to 30 phr of crosslinking activators for free-radical crosslinking (D),
e) optionally further additives (E).

5. Rubber composition according to any of the preceding claims, wherein at least one further rubber compound is present in addition to the fully hydrogenated or partly hydrogenated polyisoprene and is selected from the group consisting of ethylene/propylene/diene rubber (EPDM), polybutadiene, hydrogenated or partly hydrogenated polybutadienes, ethylene/propylene rubber, polyisobutylene, halogenated butyl rubber, styrene/butadiene elastomer, polymethylpentene, chloroprene rubber, halogenated rubbers such as chlorinated or fluorinated polyethylenes, ethylene/vinyl acetate copolymers, acrylate rubbers, nitrile rubbers, hydrogenated nitrile rubbers, nonhydrogenated and/or high-viscosity polyisoprene, or copolymers of the compounds mentioned, and natural rubber.

6. Rubber composition according to any of the preceding claims, wherein the at least one free-radical initiator (B) is selected from the group consisting of peroxides, peroxy compounds, alkyl peroxides, aryl peroxides, arenyl peroxides and alkaryl peroxides, diacyl peroxides, peroxy ketals, peroxy ketones, hydroperoxides and azo compounds.

7. Rubber composition according to any of the preceding claims, wherein the free-radical initiator comprises a peroxide compound (B) selected from the group consisting of dicumyl peroxide, bis(t-butylperoxyisopropyl)benzene, dit-butyl peroxide, 2,5-dimethylhexane 2,5-dihydroperoxide, 2,5-dimethylhexyne 2,5-dihydroperoxide, dibenzoyl peroxide, bis(2,4-dichlorobenzoyl) peroxide, t-butyl perbenzoate, t-butyl peroxyisobutyrate, t-butyl cumyl peroxide, 2,5-dimethyl-2,5-di(tert-butylperoxy)hexane, 2,5-dimethyl-2,5-di(tert-butylperoxy)-3-hexyne; n-butyl 4,4'-di-(tert-butylperoxy)valerate, 1,1-di(tert-butyl-peroxy)-3,3,5-trimethylcyclohexane and 1,3-/1,4-bis(tert-butylperoxyisopropyl)benzene.

8. Rubber composition according to any of the preceding claims, wherein the filler (C) is selected from carbon black, graphite, silica, silicate, metal oxide, metal hydroxide, carbonate, sulphate, glass beads, diatomaceous earth, magnetic or magnetizable fillers, conductive fillers, fibres and organic fillers.

9. Rubber composition according to any of the preceding claims, wherein the crosslinking activators (D) used are compounds which contain at least one C=C double bond, preferably two or more C=C double bonds.

10. Rubber composition according to any of the preceding claims, wherein the crosslinking activator (D) is at least one compound selected from 2,4,6-tris(allyloxy)-1,3,5-triazine (TAC), triallyl isocyanurate (TAIC), diallylmelamine, diisopropenylbenzene, divinylbenzene, divinyl ether, divinyl sulphone, diallyl phthalate, triallyl cyanurate, triallyl phosphate, N,N'-1,3-phenylenebismaleimide, 2,4-toluylene-bis(maleimide), triallyl trimellitate, butadiene oligomers or polymers, 1,2-polybutadiene, 1,2-polybutadiene derivatives, butadiene-styrene copolymers, monoacrylates, diacrylates, triacrylates, trimethylpropane triacrylate, mono-methacrylates, dimethacrylates, trimethacrylates, trimethylolpropane trimethacrylate (TRIM), triallylphosphonic esters, unsaturated polyesters formed from aliphatic diols and polyols, maleic acid, fumaric acid and/or itaconic acid.

11. Rubber composition according to any of the preceding claims, wherein the at least one additive (E) is selected from the group consisting of ageing stabilizers, antioxidants, antiozonants, flame retardants, hydrolysis retardants, adhesion promoters, demoulding aids or agents for reducing component tack, dyes and/or pigments, plasticizers and processing aids.

12. Use of a rubber composition according to any of Claims 1 to 11 for production of a moulding.

13. Process for producing a rubber composition according to any of the preceding claims, wherein the ingredients are combined and mixed, and optionally homogenized.

14. Process for producing a moulding, wherein a rubber composition according to any of Claims 1 to 11 is free-radically crosslinked, optionally while increasing the temperature.

15. Process according to either of Claims 13 or 14 for production of a seal or impregnation, coating, membrane or adhesive composition, especially of tubes, valves, pumps, filters, moisteners, reformers, reservoir vessels, vibration dampers and acoustically active components; as a coating for wovens and nonwovens, of an electromagnetic shield, of tyres, brake sleeves, braking parts, axial sleeves, bellows, floor coverings of profiles; and of seals, membranes or gas diffusion layers for fuel cells.

16. Moulding obtainable by a process according to Claim 14.

17. Moulding according to Claim 16 in the form of a seal or impregnation, coating, membrane or adhesive composition, especially of tubes, valves, pumps, filters, moisteners, reformers, reservoir vessels, vibration dampers and acoustically active components; as a coating for wovens and nonwovens, of an electromagnetic shield, of tyres, brake sleeves, brake parts, axial sleeves, bellows, floor coverings of profiles; and of seals, membranes or gas diffusion layers for fuel cells.

18. Use of a moulding according to either of Claims 16 and 17 in fuel cells, in production, transport or processing technology and in the packaging sector for foods or for medical products, as a seal, as a coating and/or as an adhesive.

## Revendications

1. Composition de caoutchouc pour la fabrication d'un élastomère, contenant
a) au moins un composé de caoutchouc (A) et
b) au moins un initiateur radicalaire (B),
le composé de caoutchouc (A) étant réticulable par voie radicalaire et contenant au moins 50 phr d'un polyisoprène totalement hydrogéné ou partiellement hydrogéné qui a une viscosité à l'état fondu < 10⁵ Pas à 38°C.

2. Composition de caoutchouc selon la revendication 1, contenant
a) 100 phr de composés de caoutchouc (A), au moins 50 phr étant un polyisoprène totalement hydrogéné ou partiellement hydrogéné de faible viscosité, et
b) 0,1 à 15 phr de l'initiateur radicalaire (B).

3. Composition de caoutchouc selon la revendication 1 ou 2, dans laquelle le polyisoprène présente un poids moléculaire moyen de 5 000 à 100 000 g/mole, de préférence de 10 000 à 60 000 g/mole.

4. Composition de caoutchouc selon l'une quelconque des revendications précédentes, contenant
a) 100 phr des composés de caoutchouc (A), au moins 50 phr étant un polyisoprène totalement hydrogéné ou partiellement hydrogéné de faible viscosité,
b) 0,1 à 15 phr de l'initiateur radicalaire (B),
c) 0 à 800 phr de charges (C),
d) 0 à 30 phr d'activateurs de réticulation pour la réticulation radicalaire (D),
e) éventuellement des additifs supplémentaires (E).

5. Composition de caoutchouc selon l'une quelconque des revendications précédentes, dans laquelle au moins un autre composé de caoutchouc est contenu en plus du polyisoprène totalement hydrogéné ou partiellement hydrogéné, choisi dans le groupe constitué par le caoutchouc éthylène/propylène/diène (EPDM), le polybutadiène, les polybutadiènes hydrogénés ou partiellement hydrogénés, le caoutchouc éthylène/propylène, le polyisobutylène, le caoutchouc de butyle halogéné, l'élastomère styrène/butadiène, le polyméthylpentène, le caoutchouc de chloroprène, les caoutchoucs halogénés tels que les polyéthylènes chlorés ou fluorés, les copolymères éthylène/acétate de vinyle, les caoutchoucs d'acrylate, les caoutchoucs de nitrile, les caoutchoucs de nitrile hydrogénés, le polyisoprène non hydrogéné et/ou hautement visqueux ou les copolymères des composés mentionnés, et le caoutchouc naturel.

6. Composition de caoutchouc selon l'une quelconque des revendications précédentes, dans laquelle le ou les initiateurs radicalaires (B) sont choisis dans le groupe constitué par les peroxydes, les composés de peroxy, les peroxydes d'alkyle, d'aryle, d'arényle et d'alkaryle, les peroxydes de diacyle, les peroxydicarbonates, les peroxydes de dialkyle, les peresters, les peroxycétals, les peroxycétones, les hydroperoxydes et les composés azo.

7. Composition de caoutchouc selon l'une quelconque des revendications précédentes, dans laquelle l'initiateur radicalaire contient un composé de peroxyde (B) choisi dans le groupe constitué par le peroxyde de dicumyle, le bis-(t-butyl-peroxy-isopropyl)benzène, le peroxyde de di-t-butyle, le 2,5-dihydroperoxyde de 2,5-diméthylhexane, le 2,5-dihydroperoxyde de 2,5-diméthylhexyne, le peroxyde de dibenzoyle, le peroxyde de bis-(2,4-dichlorobenzoyle), le perbenzoate de t-butyle, le peroxyisobutyrate de t-butyle, le peroxyde de t-butylcumyle, le 2,5-diméthyl-2,5-di(tert-butylperoxy)-hexane, le 2,5-diméthyl-2,5-di-(tert-butylperoxy)hexyne(3) ; le n-butyl-4,4'-di(tert-butylperoxy)valérate, le 1,1-di(tert-butylperoxy)-3,3-5-triméthylcyclohexane et le 1,3-/1,4-bis(tert-butylperoxy-isopropyl)benzène.

8. Composition de caoutchouc selon l'une quelconque des revendications précédentes, dans laquelle la charge (C) est choisie parmi la suie, le graphite, la silice, un silicate, un oxyde métallique, un hydroxyde métallique, un carbonate, un sulfate, des billes de verre, des terres de diatomées, des charges magnétiques ou magnétisables, des charges conductrices, des fibres et des charges organiques.

9. Composition de caoutchouc selon l'une quelconque des revendications précédentes, dans laquelle des composés qui contiennent au moins une, de préférence deux doubles liaisons C=C et plus sont utilisés en tant qu'activateur de réticulation (D).

10. Composition de caoutchouc selon l'une quelconque des revendications précédentes, dans laquelle l'activateur de réticulation (D) est au moins un composé choisi parmi la 2,4,6-tris(allyloxy)-1,3,5-triazine (TAC), l'isocyanurate de triallyle (TAIC), la diallylmélamine, le diisopropénylbenzène, le divinylbenzène, le divinyléther, la divinylsulfone, le phtalate de diallyle, le cyanurate de triallyle, le phosphate de triallyle, le N,N'-1,3-phénylènebismaléimide, le 2,4-toluylènebis(maléimide), le triméllitate de triallyle, les oligomères ou polymères de butadiène, le 1,2-polybutadiène, les dérivés de 1,2-polybutadiène, les copolymères de butadiène-styrène, les mono-acrylates, les diacrylates, les triacrylates, le triacrylate de triméthylpropane, les mono-méthacrylates, les diméthacrylates, les triméthacrylates, le triméthacrylate de triméthylolpropane (TRIM), les esters de l'acide triallylphosphonique, les polyesters insaturés de diols et polyols aliphatiques, l'acide maléique, l'acide fumarique et/ou l'acide itaconique.

11. Composition de caoutchouc selon l'une quelconque des revendications précédentes, dans laquelle le ou les additifs (E) sont choisis dans le groupe constitué par les agents antivieillissement, les antioxydants, les agents de protection de l'ozone, les agents ignifuges, les agents anti-hydrolyse, les promoteurs d'adhésion, les agents de démoulage ou les agents pour réduire le caractère collant des pièces, les colorants et/ou les pigments, les plastifiants et les adjuvants d'usinage.

12. Utilisation d'une composition de caoutchouc selon l'une quelconque des revendications 1 à 11 pour la fabrication d'un corps moulé.

13. Procédé de fabrication d'une composition de caoutchouc selon l'une quelconque des revendications précédentes, dans lequel les composants sont rassemblés, mélangés et éventuellement homogénéisés.

14. Procédé de fabrication d'un corps moulé, dans lequel une composition de caoutchouc selon l'une quelconque des revendications 1 à 11 est réticulée par voie radicalaire éventuellement avec élévation de la température.

15. Procédé selon l'une quelconque des revendications 13 ou 14, pour la fabrication d'un joint ou d'une imprégnation, d'un revêtement, d'une membrane ou d'une composition adhésive, notamment de tuyaux, de vannes, de pompes, de filtres, d'humidificateurs, de reformeurs, de récipients de stockage, d'amortisseurs de vibration et de composants à action acoustique ; en tant que revêtement de tissus et non-tissés, d'un blindage électromagnétique, de pneus, coupelles de pistons de freins, parties de freins, soufflets de cardans, soufflets d'étanchéité, revêtements de sols ou profilés ; ainsi que de joints, membranes ou couches de diffusion de gaz pour piles à combustible.

16. Corps moulé, pouvant être obtenu par un procédé selon la revendication 14.

17. Corps moulé selon la revendication 16, sous la forme d'un joint ou d'une imprégnation, d'un revêtement, d'une membrane ou d'une composition adhésive, notamment de tuyaux, de vannes, de pompes, de filtres, d'humidificateurs, de reformeurs, de récipients de stockage, d'amortisseurs de vibration et d'éléments à action acoustique ; en tant que revêtement de tissus et non-tissés, en tant que blindage électromagnétique, en tant que pneus, coupelle de piston de frein, partie de freinage, soufflet de cardan, soufflet d'étanchéité, revêtement de sol ou profilé ; ainsi qu'en tant que joint, membrane ou couche de diffusion de gaz pour piles à combustible.

18. Utilisation d'un corps moulé selon l'une quelconque des revendications 16 ou 17 dans des piles à combustible, dans le domaine de la production, du transport, du génie des procédés et de l'emballage de produits alimentaires ou de produits médicaux, en tant que joint, en tant que revêtement et/ou en tant qu'adhésif.
